# EUROPEAN PATENT SPECIFICATION

(11) **EP 0 412 461 B1**
(45) Date of publication and mention of the grant of the patent: **29.11.1995**
(21) Application number: 90114991.4
(22) Date of filing: 03.08.1990
(51) Int. Cl.: H04N 1/32

(54) **Facsimile apparatus and facsimile transmission method for digital communication network**
Faksimilegerät und Faksimileübertragungsverfahren für ein digitales Übertragungsnetz
Appareil de fac-similé et procédé de transmission fac-similé pour un réseau de communication numérique

(30) Priority: 07.08.1989 JP 205047/89; 07.08.1989 JP 205048/89
(43) Date of publication of application: 13.02.1991
(73) Proprietor: SHARP KABUSHIKI KAISHA, Osaka-shi Osaka 545 (JP)
(72) Inventor: Shimonaga, Sadaaki, Nara-shi, Nara-ken (JP); Katsurada, Morihiro, Nara-shi, Nara-ken (JP)
(74) Representative: TER MEER STEINMEISTER & PARTNER GbR

(56) References cited:
- FR-A- 2 578 374
- US-A- 4 733 303
- US-A- 4 734 780
- US-A- 4 841 373
- PATENT ABSTRACTS OF JAPAN vol. 12, no. 322 (E-652) 31 August 1988 & JP-A-63 086 674 (NIPPON TELEGRAPH & TELEPHONE CORPORATION NTT) 18 April 1988

## Description

### BACKGROUND OF THE INVENTION

### Field of the Invention

The present invention generally relates to facsimile apparatuses and facsimile transmission methods, and more particularly, to an apparatus for and method of facsimile communication utilizing a digital communication network such as ISDN (Integrated Services Digital Network).

### Description of the Background Art

With the development in electrical telecommunication technology, various non-telephone in-house equipments such as facsimile and personal computer as well as telephone sets and the like have been connected to widely available common subscriber telephone lines.

Meanwhile, as the digital technology develops, digitization of transmission media and branch exchangers has been advanced.

Under such circumstances, a digital communication network called ISDN (Integrated Services Digital Network) has been developed which couples digital facilities to one another to provide integratedly various services of telephone or non-telephone. The term ISDN will be used hereinafter as indicating a service network which is "provided with functions of making digital connections between users and a network interface".

When facsimile communication is performed utilizing a digital communication network such as ISDN, it is done according to G4 mode, a standard recommended by CCITT (International Telegraph and Telephone Consultative Committee). This G4 mode communication is performed through a channel having a transmission rate of 64k bps. Therefore, fast transmission of information is possible.

Generally, facsimile communication utilizing a common subscriber telephone line is performed according to G3 mode, another standard of CCITT. In the G3 mode, an A4-size original can be transmitted in about one minute but this G3 mode provides a lower speed as compared to the transmission rate of the G4 mode.

In consideration of compatibility with existing G3 facsimile apparatus, a facsimile apparatus operable in both communication modes of G4 and G3 has been put to practical use. This facsimile apparatus with both modes of G3 and G4 can be connected to an ISDN line as well as a G3 mode subscriber telephone line and a G4 mode fast digital line (facsimile-directed line). A G3/G4 mode facsimile apparatus of this type is disclosed in FR-A-2578374.

A G3/G4 facsimile apparatus (facsimile apparatus with both modes of G3 and G4) connected to the ISDN line can perform transmission through the ISDN line either in the G3 mode or in the G4 mode. The ISDN communication line has channels each different in data transmission rate, from which selections are made to perform efficient communication according to communication modes. The selection of a channel and the adjustment between the channel and the facsimile apparatus in data transmission rate are made by a network.

An ISDN communication network is connectable to existing subscriber telephone lines or facsimile-directed lines (digital lines). The G3/G4 facsimile apparatus connected to the ISDN line performs communication in both modes through the ISDN line. This ISDN line is also connectable through a modem to a facsimile apparatus which can make facsimile communication only in the G3 mode.

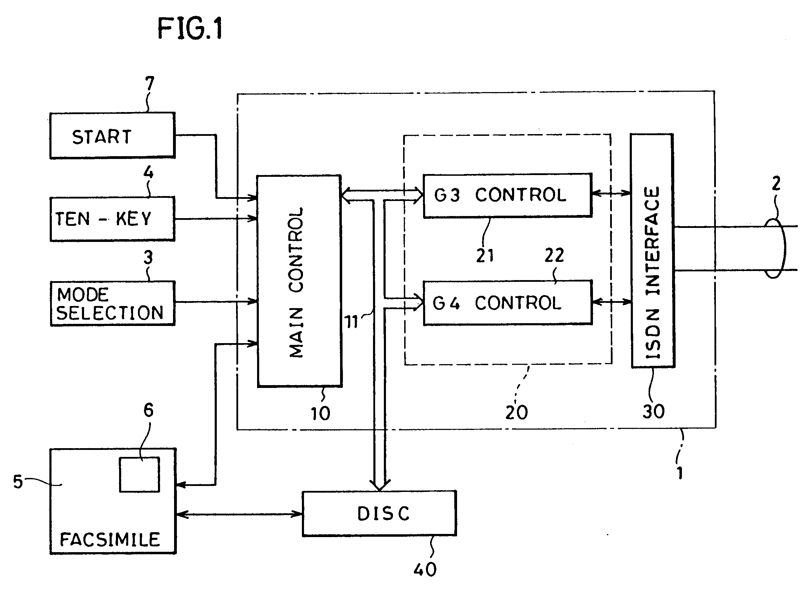

Fig. 1 is a schematic diagram showing structure of a conventional G3/G4 facsimile apparatus. Referring to Fig. 1, the facsimile apparatus comprises a processing circuit 1 for executing various types of control required to perform communication, and a facsimile mechanism 5 for performing reading of an original, printing out of received information and so forth.

The processing circuit 1 comprises a control circuit constituted of, for example, a microcomputer for monitoring and controlling operations of the entire facsimile apparatus, a communication control circuit 20 for executing protocol control over respective lines for the G3 and G4 modes, and an ISDN interface circuit 30 constituted of, for example, a microcomputer for establishing interface between an ISDN line 2 and the communication control circuit 20.

The main control circuit 10 controls operation of the facsimile mechanism 5 in response to signals from an operation portion including mode selection key 3, ten-key 4, start key 7 and the like, and also controls operation of the communication control circuit 20 through a control bus 11. Further, the main control circuit 10 controls data transmission between the facsimile mechanism 5 and a disc unit 40 through the control bus 11. The disc unit 40 stores programs necessary for the various types of control and data received or to be transmitted by the facsimile apparatus.

The communication control circuit 20 comprises a G3 control circuit 21 for controlling facsimile communication in the G3 mode and a G4 control circuit 22 for controlling facsimile communication in the G4 mode.

The G3 control circuit 21 controls G3 line protocol and transmits and receives data to and from the disc unit 40.

The G4 control circuit 22 controls G4 line protocol and transmits and receives data to and from the disc unit 40.

The ISDN interface circuit 30 converts a signal on the ISDN line 2 into a data signal for the G4 control circuit 22 (for example 64k bps), an audio signal for the G3 control circuit 21 (analog signal of, for example, 3.4 kHz) and calling/reference control signals for the control circuits 21 and 22. Also, the ISDN interface circuit 30 transmits, in response to a control signal from the communication control circuit 20, an information signal and a control signal from the communication control circuit 20 onto the ISDN line 2. This interface circuit performs conversion of signals, confirmation of transmission and reception, and the like.

The mode selection key 3 generates a signal specifying the communication mode G3 or G4.

The ten-key 4 receives input of address information specifying a destination.

The start key 7 generates a signal specifying a start of data transmission.

A detection element 6 generates a signal indicating that an original has been set in the facsimile mechanism 5.

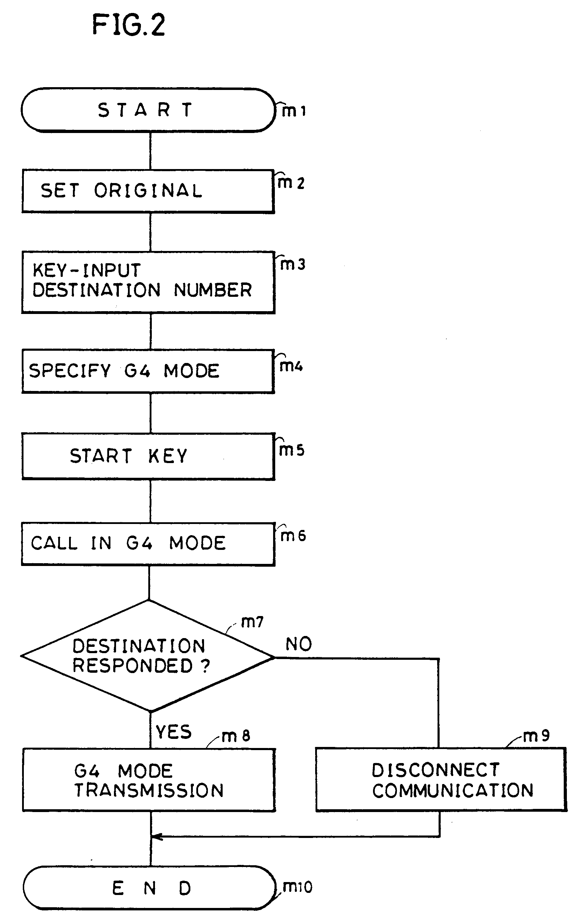

Now, operation of the apparatus will be described with reference to an operation flow chart shown in Fig. 2.

A caller sets an original to be transmitted in the facsimile mechanism 5 (step m2).

The setting of original is detected by the detection element 6. A detection signal from the detection element 6 is applied to the main control circuit 10. The main control circuit 10 is activated by that signal to start various control operations necessary for transmission.

Next, a destination specifying number or code is entered with the ten-key 4 (step m3). The destination specifying number is applied to the main control circuit 10.

At step m4, the G4 mode is selected as transmission mode through the mode selection key 3 so that a G4 mode select signal is applied to the main control circuit 10. Subsequently, a transmission start indicating signal is generated when the start key 7 is operated (step m5).

The main control circuit 10 drives the G4 control circuit 22 in response to the transmission start indicating signal. The G4 control circuit 22 forms, based on destination specifying information received from the main control circuit 10, calling information including information for specifying its own station (caller specifying information), G4 mode specifying information and the like, and transmits the same through the ISDN interface circuit 30 to the ISDN line 2. In this manner, a call is made in the G4 mode (step m6).

On a receiving side, in response to reception of the call or reference, the incoming calling information is applied to the G4 control circuit 22. When the destination specifying information contained in the incoming calling information matches the specifying number of its own, the G4 control circuit 22 of the destination sends back a response signal (transmission acknowledge signal) through the ISDN interface circuit 30 to the calling side. When the destination specifying information contained in the calling information does not match the specifying number of its own, the G4 control circuit on the called side ignores the calling information.

On the calling side, the G4 control circuit 22 detects presence or absence of the response signal (step m7). When the response signal is present, the G4 control circuit 22 reads out original information that has been already written in the disc unit 40 under control of the main control unit 10 and transmits the same according to the G4 communication protocol onto the ISDN line 2 through the ISDN interface circuit 30 (step m8).

When the facsimile apparatus on the called side is not provided with the G4 mode communication function, it ignores the calling information as described above. In this case, the response signal is not transmitted from any apparatus so that a signal indicative of non-existence of destination is sent back under control of the network.

The G4 control circuit 22 on the calling side directs, in response to the non-response signal (indicative of non-existence of destination), the interface circuit 30 to disconnect the line. In response to the instruction of line disconnection, the ISDN interface circuit 30 disconnects the communication line 2 (step m9). As a result, the facsimile apparatus is put in a transmissible state/reception stand-by state.

The non-acceptance of transmission is displayed at the operation portion of the mechanism 5 through operation of the main control circuit 10. An operator who has noticed this display at the operation portion returns to step m3 to enter again the destination specifying information and specifies this time the G3 mode for facsimile transmission.

In the structure described above, operators have to know not only the destination specifying information but communication modes available at the destination for facsimile communication.

Further, the facsimile communication requires operation of the communication mode selection key, resulting in complicated operation procedure.

If the destination facsimile apparatus is not provided with the G4 mode function, after the first attempt of transmission in the G4 mode has resulted in disconnection of the communication line, a re-call has to be made specifying the G3 mode. Therefore, the operation for an operator becomes complicated.

Even when the destination facsimile apparatus is operable in both modes of G3 and G4, in case an operator first specifies the G3 mode, a call is made in the G3 mode to perform subsequently facsimile communication in the G3 mode. Since the G3 mode is a lower-speed communication mode when compared with the G4 mode, it takes a longer communication time and charges unduely extra fee for the communication.

A system to make a match in communication mode between facsimile apparatuses each having a plurality of communication modes is disclosed in Japanese Patent Laying-Open No. 59-26152. In this prior art system, when a line connection is established, one facsimile apparatus transmits a signal indicative of available transmission modes to a destination apparatus. The destination apparatus selects, according to priority, one communication mode among them and sends back a signal indicating the selected one to the transmission apparatus. The transmission apparatus starts facsimile transmission according to the sent back selected communication mode.

US-A-4733303 discloses a facsimile apparatus being capable of transmitting information in analog modes (G3) with a selectable bit rate dependent on the actual transmission line condition.

### SUMMARY OF THE INVENTION

An object of the present invention is to provide a facsimile apparatus superior in operability.

Another object of the present invention is to provide a facsimile apparatus which can make communication in a mode of a highest possible speed.

Still another object of the present invention is to provide a facsimile apparatus with which a transmission can be made even if available communication modes of a destination are not known to a caller.

A further object of the present invention is to provide a facsimile communication method which simplifies operation procedure for operators.

A still further object of the present invention is to provide a facsimile communication method which does not cause any extra charge for communication.

A facsimile apparatus according to the present invention comprises the features of appended claim 1.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing structure of a conventional facsimile apparatus.

Fig. 2 is a flow chart showing operation of a conventional facsimile apparatus.

Fig. 3 is a diagram showing structure of a facsimile apparatus according to an embodiment of the present invention.

Fig. 4 is a flow chart showing operation of a facsimile apparatus according to the present invention.

Fig. 5 illustrates storage content of a memory used in a facsimile apparatus according to the present invention.

Figs. 6A and 6B are diagrams showing operation flows of a facsimile apparatus according to another embodiment of the present invention.

### DESCRIPTION OF THE PREFERRED EMBODIMENTS

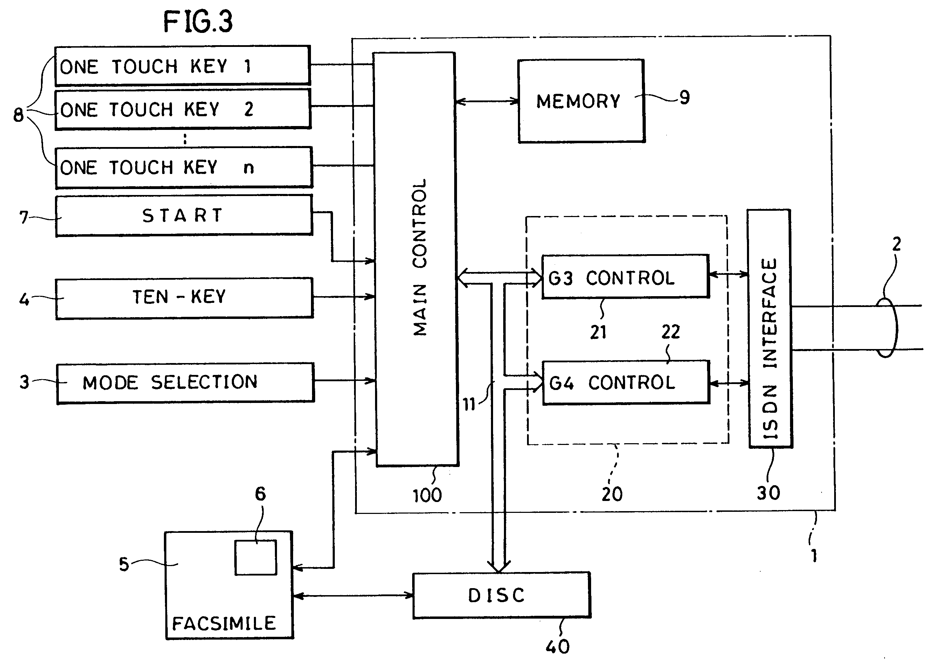

Fig. 3 is a schematic diagram showing structure of a facsimile apparatus according to an embodiment of the present invention. In Fig. 3, the same reference numerals are given to the parts corresponding to those in the conventional facsimile apparatus shown in Fig. 1.

Referring to Fig. 3, the facsimile apparatus further comprises one-touch keys 8 and a memory 9. The one-touch keys 8 are provided n in number allowing operators to specify n different destinations at maximum. That is, one one-touch key corresponds to one destination. Therefore, by operating these one-touch keys, the destination specifying information can be generated without the use of the ten-key 4.

The memory 9 is a readable/writable memory and stores the destination specifying information corresponding to the respective one-touch keys. For example, when the number of a one-touch key is assumed to represent an address, the memory 9 stores destination specifying information corresponding to each address.

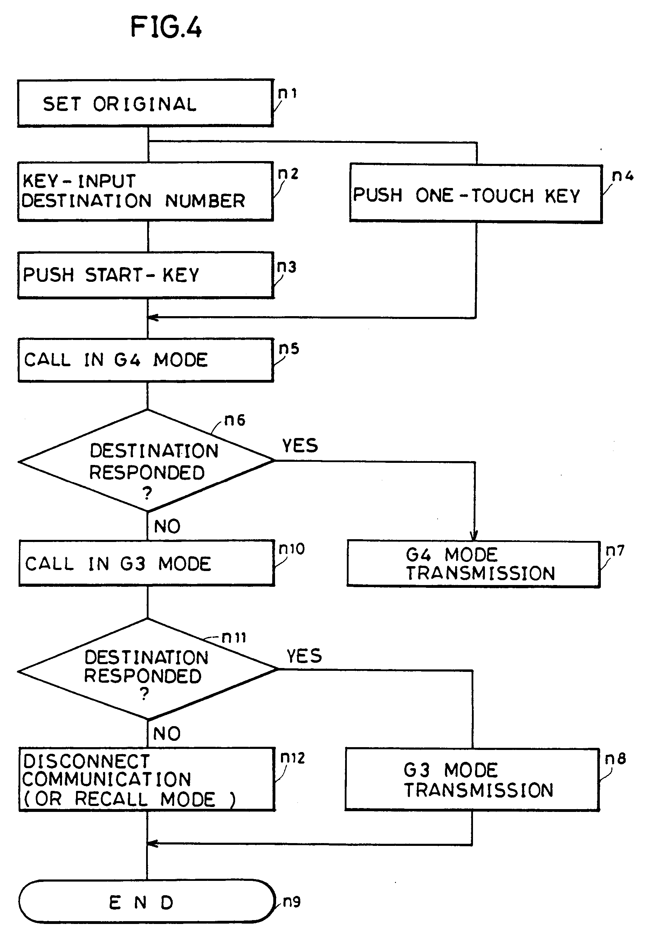

Now, operation of the facsimile apparatus will be described with reference to an operation flow chart of Fig. 4.

When an original is set in the facsimile mechanism 5, the setting is detected by the detection element 6 (step n1). The main control circuit 100 starts various types of control necessary for a transmission, in response to a detection signal from the detection element 6.

Destination specifying information is generated through operation of the ten-key 4 and then a transmission start instruction is generated with the start key 7 (steps n2 and n3).

The main control circuit 100 drives the G4 control circuit 22 in response to the transmission start instruction. The G4 control circuit 22 creates calling information from the destination specifying information received from the main control circuit 100 and transmits the same through the ISDN interface circuit 30 to the ISDN line 2. This call is made in the G4 mode in the form of a non-limit digital signal of 64k bps (step n5).

The G4 control circuit 22 waits until the calling information reaches a destination and a response or acknowledge signal to the call is sent back (step n6).

When the response signal from the destination is received, original information that has been already stored in the disc unit 40 is transmitted, under control of the G4 control circuit 22, to the ISDN line 2 (step n7).

When no response signal is received from the destination, the G4 control circuit 22 informs the main control circuit 100 thereof. The main control circuit 100 makes determination that the destination facsimile apparatus has not been provided with communication function of the G4 mode and activates in turn the G3 control circuit 21. The G3 control circuit 21 creates from the destination specifying information of the main control circuit 100 calling information according to the G3 mode protocol and transmits the same through the ISDN interface circuit 30 to the ISDN line 2. This call is made in the form of an audio signal of 3.1 kHz.

The G3 control circuit 21 monitors a control signal from the ISDN interface circuit 30 and waits for a response signal to the call just made to be sent back. When the response signal is received, the G3 control circuit 21 makes access to the disc unit 40, reads out the original information, and transmits the read-out information through the ISDN interface circuit 30 in the G3 mode (step n8).

If at step n11, the response signal to the call made in the G3 mode has not been received, the G3 control circuit 21 applies a disconnection instructing signal to the ISDN interface circuit 30. The ISDN interface circuit 30 disconnects a transmission path to the ISDN line 2 in response to the disconnection instructing signal. Thus, the facsimile apparatus is put in the reception stand-by state.

Meanwhile, if at step n2, a one touch key 8 is operated instead of the ten-key 4 (step n4), the main control circuit 100 makes access to the memory 9 and reads out destination specifying information corresponding to the operated one-touch key. Further, the main control circuit 100 gives instructions to the facsimile mechanism to start reading of the original. Thereafter, the operation following the step n6 is performed.

Furthermore, at step n12, when no response or acknowledge signal to the call made in the G3 mode has been received, an operation mode of "re-call" where a call is made again in the G4 mode may be executed instead of disconnecting the ISDN line 2.

While in the embodiment above, the first call is made in the G4 mode, another method as will be described below may be taken.

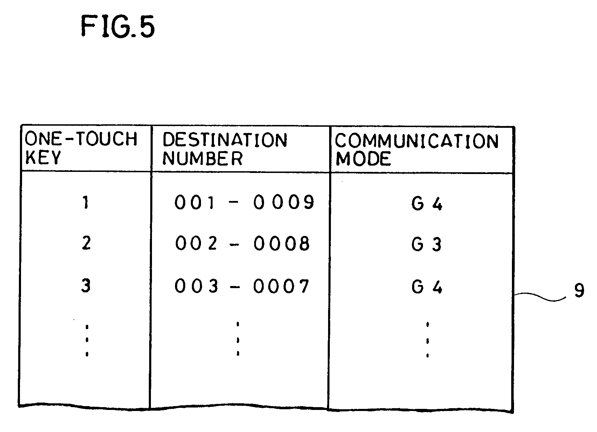

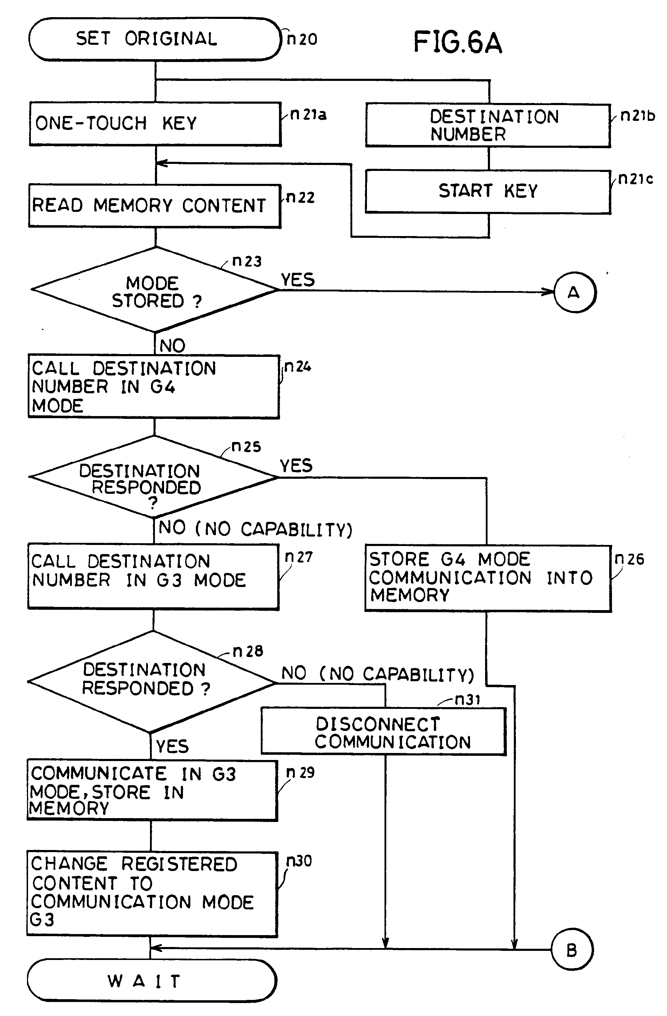

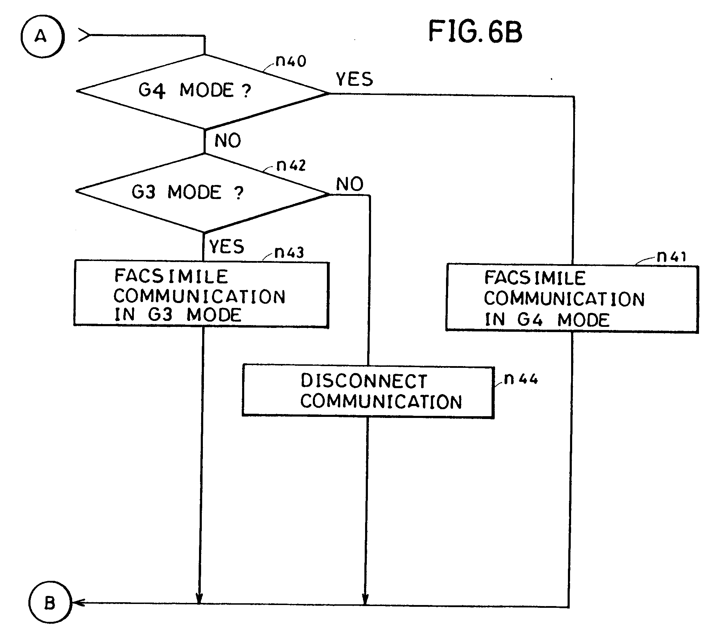

As shown in Fig. 5, destination specifying information (destination facsimile numbers) and communication modes corresponding to the respective one-touch keys 8 are stored in the memory 9. That is, in making programs for the one-touch keys 8 (in registering the destination numbers), also their corresponding communication modes are registered. In the transmission, calls are made according to those registered communication modes. In the following, operation of the apparatus will be described along the operation flow charts in Figs. 6A and 6B.

When an original is set in the facsimile mechanism 5, the setting is detected by the detection element 6. The main control circuit 100 is activated to be put in a key-input stand-by state.

A destination specifying signal is generated through operation of a one-touch key 8 (step n21a). At this time, the main control circuit 100 may receive the destination specifying information through operation of the ten-key 4 (step n21b) and then a transmission start instruction through operation of the start-key 7 (step 21c).

When the one-touch key 8 has been operated, the main control circuit 100 makes access to the memory 9 and reads out a corresponding content in the memory 9. On the other hand, when the ten-key 4 and the start-key 7 have been operated, the main control circuit 100 makes determination as to whether or not the entered destination number has been stored in the memory 9, and when it is stored, the main control circuit 100 reads out the destination number along with the stored communication mode therefrom (step n22). In this retrieval operation, the contents in the memory 9 may be sequentially read out to be compared with the input information.

Alternatively, the memory 9 may have the destination numbers stored in a content addressable memory area and retrieved using the input information as retrieval data. If a match is found, based on its address, a storage content of the memory 9 may be read out. In the case of the content addressable memory, the communication mode information may be stored in a general RAM (Random Access Memory).

Subsequently, the main control circuit 100 makes determination as to whether or not the communication mode information has been read out (step n23). When the destination specifying information is entered through operation of a one-touch key 8, the communication modes have been stored generally in advance. However, they may not be registered in making programs for the one-touch keys.

Furthermore, when the information is entered through operation of the ten-key 4 and the start key 7, the input destination specifying information may not have been stored in the memory 9. In such a case, since the memory 9 is provided with an extra memory area besides the memory area corresponding to the one-touch keys 8, it can store more destination numbers than the number of the one-touch keys.

When a determination is made that the communication modes have not been stored, the main control circuit 100 applies the entered destination specifying information to the G4 control circuit 22. The G4 control circuit 22 creates, based on the applied destination specifying information, calling information and transmits the same through the ISDN interface circuit 30 to the ISDN line 2 (step n24).

When a response signal to the call made in the G4 mode is sent back from a destination, the G4 control circuit 22 reads out contents of the disc unit 40 and executes facsimile transmission in the G4 mode.

The main control circuit 100 writes in the memory area for the communication modes, in response to detection of the response signal by the G4 control circuit 22, data indicating that the destination can communicate in the G4 mode(step n26). At this time, if the destination specifying information has been already registered in the memory 9, the communication mode specifying information is written in a corresponding memory area. When the destination specifying information has not been registered yet, it is written into the memory 9 together with the communication mode specifying information.

When the response signal has not been sent back at step n25, the main control circuit 100 makes determination that the destination facsimile apparatus has not been provided with function of the G4 mode communication and activates the G3 control circuit 21. The G3 control circuit 21 creates, based on the destination specifying information from the main control circuit 100, calling information and transmits the same through the ISDN interface circuit 30 to the ISDN line 2 (step n27).

When no response signal to the call made in the G3 mode has been sent back from the destination (step n28), the ISDN line 2 is disconnected under control of the G3 control circuit 21 (step n31) and the facsimile apparatus is put in the reception stand-by state (step n32).

When a response signal to the call made in the G3 mode has been sent back from the destination at step n28, a facsimile transmission in the G3 mode is performed under control of the G3 control circuit 21. Upon reception of such G3 mode transmissible information from the G3 control circuit 21, the main control circuit 100 stores the G3 mode transmissible information in a location corresponding to the destination specifying information in the memory 9. At this time, when the input destination specifying information has not been registered yet, the G3 mode transmissible information is stored together with the input destination specifying information (step n29).

Furthermore, when a communication has been made in the G3 mode in spite that the G4 mode has been read out first as the communication specifying information, the first G4 mode transmissible information is changed to the G3 mode transmissible information to be stored in the original location (step n30). In this manner, erroneous registration of the communication mode specifying information is corrected.

Through the operation described above, the destination specifying information and the corresponding communication mode specifying information are properly registered in the first attempts of facsimile communications.

In the second and following facsimile communications to the same destination, since the communication mode specifying information has been already stored in the memory 9, the main control circuit 100 makes identification of the read-out communication mode specifying information at steps n40 and n41.

When a determination is made that the read-out communication mode specifying information represents the G4 mode at step n40, a facsimile communication is made in the G4 mode (step n41).

When it is detected at step n42 that the read-out communication mode specifying information represents the G3 mode, a facsimile communication is made in the G3 mode (n43).

When the G3 mode is not detected at step n42, a determination is made that communication is impossible in either mode of G4 and G3, and the ISDN line 2 is disconnected (step n44).

Thus, by storing in advance the communication mode specifying information together with the destination specifying information in the memory 9, efficient facsimile communication can be made.

Meanwhile, in entering the destination specifying information, shortened (coded) destination specifying information may be entered using a shortening key among function keys and operating one or a plurality of keys of the ten-key 7.

While in the embodiment above, the G3 mode and the G4 mode are used as available communication modes, the same effects can be obtained even when communication modes of different communication capabilities are employed. More specifically, even when communication modes of different communication standards and different capabilities in transmitting information from those of G3 and G4 modes are used, the same effects as in the embodiment above can be obtained.

As has been described in the foregoing, according to the present invention, a call is made first in a high-speed communication mode and then in response to presence or absence of a response signal to the call, a facsimile communication is made in the high-speed communication mode or a low-speed communication mode. Therefore, the facsimile communication can be made in a mode in accordance with the communication capability of a destination so that a facsimile apparatus providing a reasonable communication time, a reduced communication charge and simplified operation procedure can be obtained.

Furthermore, if the communication mode specifying information is stored in the memory together with the destination specifying information, a high-performance facsimile apparatus which can make a communication in a mode corresponding to the communication capability of a destination can be obtained.

Although the present invention has been described and illustrated in detail, it is clearly understood that the same is by way of illustration and example only and is not to be taken by way of limitation, the scope of the present invention being limited only by the terms of the appended claims.

## Claims

1. A facsimile apparatus connected to a communication line of a digital communication network and capable of facsimile communication in first and second communication modes, said first communication mode having a larger communication capability than said second communication mode, comprising:
means (4, 7, 8) for generating destination specifying information;
means (7, 8) for generating a transmission start indicating signal;
first communication means (22, 30) for making facsimile communication in said first communication mode, including first calling means for creating, based on said generated destination specifying information, first calling information suitable to said first communication mode and transmitting in said first communication mode said first calling information onto said communication line;
second communication means (21, 30) for making said facsimile communication in said second communication mode, including second calling means for creating, based on said generated destination specifying information, second calling information suitable to said second communication mode and transmitting in said second communication mode said second calling information onto said communication line;
first detection means (22, 30) for monitoring said communication line and detecting whether or not an acknowledge signal for said first calling information has been sent back;
means (22, 30) responsive to detection of said acknowledge signal by said first detection means, for activating said first communication means to execute facsimile communication in said first communication mode;
means (100, 21) responsive to non-detection of said acknowledge signal by said first detection means for activating said second calling means;
second detection means (21, 30) for monitoring said communication line and detecting whether or not an acknowledge signal for said second calling information has been sent back;
means (21) responsive to detection of the acknowledge signal by said second detection means, for activating said second communication means to execute facsimile communication in said second communication mode;
**characterized by**
storage means (9) for storing destination specifying information and communication mode specifying information corresponding to respective pieces of the destination specifying information;
means (100) responsive to said transmission start indicating signal, for making access to said storage means and determining whether or not the communication mode specifying information has been stored corresponding to the generated destination specifying information;
means (100) responsive to determination of non-existence of stored communication mode specifying information by said determination means, for enabling said first calling means;
means (100) responsive to determination of existence of stored communication mode specifying information by said determining means for activating either of said first and second calling means according to said determined communication mode specifying information; and
means responsive to determination of existence of stored communication mode specifying information by said determining means, for being activated to detect match/mismatch between said determined communication mode specifying information and the communication mode of which acknowledgement has been detected by said first or second detection means, and when a mismatch occurs, to replace said stored communication mode specifying information with the acknowledged communication mode specifying information.

2. The apparatus according to claim 1, further comprising:
means (100) responsive to determination of non-existence by said determining means and detection of an acknowledge signal by either said first or second detection means, for storing sai acknowledged communication mode specifying information in a location of said memory corresponding to said generated destination specifying information.

3. A method of facsimile communication through a communication line of a digital communication network, said facsimile communication being possible in first and second communication modes, and said first communication mode having a larger communication capability than said second communication mode, comprising the steps of:
generating destination specifying information;
generating a transmission start indicating signal;
in response to said transmission start indicating signal, making access to a memory and determining whether or not communication mode specifying information has been stored in said memory corresponding to said destination specifying information;
when the communication mode specifying information has not been stored in said memory, creating, based on said generated destination specifying information, first calling information suitable to said first communication mode and transmitting in said first communication mode said first calling information onto said communication line;
monitoring said communication line and detecting whether or not a first response signal to said first calling information has been sent back;
in response to detection of said first response signal, making facsimile communication in said first communication mode;
in response to non-detection of said first response signal, creating, based on said generated destination specifying information, second calling information suitable to said second communication mode and transmitting in said second communication mode said second calling information onto said transmission line;
monitoring said communication line and detecting whether or not a second response signal to said second calling information has been sent back;
in response to detection of said second response signal, executing facsimile communication in said second communication mode;
in response to detection of existence of said stored communication mode specifying information, creating either said first or second calling information according to said detected communication mode specifying information and executing calling operation; and
when a mismatch occurs between stored and detected communication mode specifying information and an acknowledged communication mode, updating said detected communication mode specifying information to information specifying said acknowledged communication mode.

4. The method according to claim 3, further comprising the step of:
when said stored communication mode specifying information does not exist, writing in said memory, information specifying an acknowledged communication mode corresponding to said generated destination specifying information.

5. The method according to claim 3 or 4, further comprising the step of:
in response to non-detection of said second acknowledge signal, a "re-call" is made in said first communication mode.

6. The method according to claim 3 or 4, further comprising the step of:
in response to non-detection of said second acknowledge signal, disconnecting said communication line and at the same time entering in a reception stand-by state.

## Patentansprüche

1. Faksimilegerät, das mit einer Übertragungsleitung eines digitalen Übertragungsnetzes verbunden ist und Faksimileübertragung in einem ersten und einem zweiten Übertragungsmodus ausführen kann, wobei der erste Übertragungsmodus weitergehende Übertragungsfähigkeiten als der zweite Übertragungsmodus aufweist, mit:
- einer Einrichtung (4, 7, 8) zum Erzeugen von das Ziel spezifizierender Information;
- einer Einrichtung (7, 8) zum Erzeugen eines einen Übertragungsstart anzeigenden Signals;
- einer ersten Übertragungseinrichtung (22, 30) zum Vornehmen einer Faksimileübertragung im ersten Übertragungsmodus, mit einer ersten Rufeinrichtung zum Erzeugen, auf Grundlage der erzeugten, das Ziel spezifizierenden Information, einer ersten Rufinformation, die für den ersten Übertragungsmodus geeignet ist, und zum Übertragen der ersten Rufinformation im ersten Übertragungsmodus auf die Übertragungsleitung;
- einer zweiten Übertragungseinrichtung (21, 30) zum Vornehmen einer Faksimileübertragung im zweiten Übertragungsmodus, mit einer zweiten Rufeinrichtung zum Erzeugen, auf Grundlage der erzeugten, das Ziel spezifizierenden Information, einer zweiten Rufinformation, die für den zweiten Übertragungsmodus geeignet ist, und zum Übertragen der zweiten Rufinformation im zweiten Übertragungsmodus auf die Übertragungsleitung;
- einer ersten Erkennungseinrichtung (22, 30) zum Überwachen der Übertragungsleitung und zum Erkennen, ob ein Bestätigungssignal für die erste Rufinformation zurückgesendet wurde oder nicht;
- einer Einrichtung (22, 30), die auf die Erkennung des Bestätigungssignals durch die erste Erkennungseinrichtung anspricht, um die erste Übertragungseinrichtung zum Ausführen von Faksimileübertragung im ersten Übertragungsmodus zu aktivieren;
- einer Einrichtung (100, 21), die auf die Nichterkennung des Bestätigungssignals durch die erste Erkennungseinrichtung anspricht, um die zweite Rufeinrichtung zu aktivieren;
- einer zweiten Erkennungseinrichtung (21, 30) zum Überwachen der Übertragungsleitung und zum Erkennen, ob ein Bestätigungssignal für die zweite Rufinformation zurückgesendet wurde oder nicht; und
- einer Einrichtung (21), die auf die Erkennung des Bestätigungssignals durch die zweite Erkennungseinrichtung anspricht, um die zweite Übertragungseinrichtung zum Ausführen einer Faksimileübertragung im zweiten Übertragungsmodus zu aktivieren;
**gekennzeichnet durch**
- eine Speichereinrichtung (9) zum Einspeichern von das Ziel spezifizierender Information und von den Übertragungsmodus spezifizierender Information, entsprechend jeweiligen Einheiten der die Ziele spezifizierenden Information;
- eine Einrichtung (100), die auf das Sendestart-Anzeigesignal anspricht, um auf die Speichereinrichtung zuzugreifen und zu bestimmen, ob den Übertragungsmodus spezifizierende Information zur erzeugten das Ziel spezifizierenden Information abgespeichert ist oder nicht;
- eine Einrichtung (100), die auf das Erkennen des Fehlens abgespeicherter, den Übertragungsmodus spezifizierender Information durch die Erkennungseinrichtung anspricht, um die erste Rufeinrichtung zu aktivieren;
- eine Einrichtung (100), die auf das Erkennen des Vorhandenseins abgespeicherter, den Übertragungsmodus spezifizierender Information durch die Erkennungseinrichtung anspricht, um entweder die erste oder zweite Rufeinrichtung abhängig von der erkannten, den Übertragungsmodus spezifizierenden Information zu aktivieren; und
- eine Einrichtung, die auf die Erkennung des Vorhandenseins abgespeicherter, den Übertragungsmodus spezifizierender Information durch die Erkennungseinrichtung anspricht, um so aktiviert zu werden, daß sie Übereinstimmung/Nichtübereinstimmung zwischen der ermittelten, den Übertragungsmodus spezifizierenden Information und dem Übertragungsmodus ermittelt, für den Bestätigung durch die erste oder zweite Erkennungseinrichtung erkannt wurde, um dann, wenn Nichtübereinstimmung auftritt, die abgespeicherte, den Übertragungsmodus spezifizierende Information durch die bestätigte, den Übertragungsmodus spezifizierende Information zu ersetzen.

2. Gerät nach Anspruch 1, ferner mit einer Einrichtung (100), die auf die Erkennung des Nichtvorhandenseins durch die Erkennungseinrichtung und die Erkennung eines Bestätigungssignals durch entweder die erste oder zweite Erkennungseinrichtung anspricht, um die bestätigte, den Übertragungsmodus spezifizierende Information an einer Stelle des Speichers einzuspeichern, die der erzeugten, das Ziel spezifizierenden Information entspricht.

3. Verfahren zur Faksimileübertragung über eine Übertragungsleitung eines digitalen Übertragungsnetzes, wobei die Faksimileübertragung in einem ersten und einem zweiten Übertragungsmodus möglich ist, und wobei der erste Übertragungsmodus weitergehende Übertragungsfähigkeiten hat als der zweite Übertragungsmodus, mit den folgenden Schritten:
- Erzeugen von das Ziel spezifizierender Information;
- Erzeugen eines Sendestart-Anzeigesignals;
- Zugreifen, auf das Sendestart-Anzeigesignal hin, auf einen Speicher, und Ermitteln, ob im Speicher den Übertragungsmodus spezifizierende Information entsprechend zur das Ziel spezifizierenden Information abgespeichert ist oder nicht;
- Erzeugen, wenn im Speicher keine den Kommunikationsmodus spezifizierende Information eingespeichert ist, erster Rufinformation, auf Grundlage der erzeugten, das Ziel spezifizierenden Information, die für den ersten Übertragungsmodus geeignet ist, und Übertragen dieser ersten Rufinformation im ersten Übertragungsmodus auf die Übertragungsleitung;
- Überwachen der Übertragungsleitung und Erkennen, ob ein erstes Antwortsignal auf die erste Rufinformation zurückgesendet wurde oder nicht;
- Herstellen, auf das Erkennen des ersten Antwortsignals hin, einer Faksimileübertragung im ersten Übertragungsmodus;
- Erzeugen, auf ein Nichterkennen des ersten Antwortsignals hin, zweiter Rufinformation, auf Grundlage der erzeugten, das Ziel spezifizierenden Information, die für den zweiten Übertragungsmodus geeignet ist, und Übertragen dieser zweiten Rufinformation im zweiten Übertragungsmodus auf die Übertragungsleitung;
- Überwachen der Übertragungsleitung, und Erkennen, ob ein zweites Antwortsignal auf die zweite Rufinformation zurückgesendet wurde oder nicht;
- Ausführen, auf das Erkennen des zweiten Antwortsignals hin, einer Faksimileübertragung im zweiten Übertragungsmodus;
- Erzeugen, auf das Erkennen des Vorhandenseins abgespeicherter, den Übertragungsmodus spezifizierender Information hin, entweder der ersten oder zweiten Rufinformation entsprechend zur erkannten, den Übertragungsmodus spezifizierender Information, und Ausführen eines Rufvorgangs; und
- Aktualisieren, wenn eine Nichtübereinstimmung zwischen der abgespeicherten und der erkannten, den Übertragungsmodus spezifizierenden Information und einem bestätigten Übertragungsmodus auftritt, der erkannten, den Übertragungsmodus spezifizierenden Information auf die Information, die den bestätigten Übertragungsmodus spezifiziert.

4. Verfahren nach Anspruch 3, ferner mit folgendem Schritt:
- Einschreiben, wenn keine abgespeicherte, den Übertragungsmodus spezifizierende Information existiert, von den bestätigten Übertragungsmodus spezifizierender Information entsprechend zur erzeugten, das Ziel spezifizierenden Information in den Speicher.

5. Verfahren nach einem der Ansprüche 3 oder 4, ferner mit folgendem Schritt:
- Ausführen eines "Neurufs", auf ein Nichterkennen des zweiten Bestätigungssignals hin, im ersten Übertragungsmodus.

6. Verfahren nach einem der Ansprüche 3 oder 4, ferner mit folgendem Schritt:
- Abtrennen der Übertragungsleitung und gleichzeitiges Eintreten in einen Empfangsbereitschaftszustand auf ein Nichterkennen des zweiten Bestätigungssignals hin.

## Revendications

1. Appareil de télécopie connecté à une ligne de télécommunications d'un réseau de télécommunications numériques et capable de transmettre des signaux de télécopie dans un premier et un second modes de transmission, ledit premier mode de transmission ayant des possibilités de transmissions plus étendues que ledit second mode de transmission, comportant:
un moyen (4, 7, 8) pour générer des informations de spécification de destination;
un moyen (7, 8) pour générer un signal d'indication de début de transmission;
un premier moyen de télécommunications (22, 30) pour transmettre des signaux de télécopie dans ledit premier mode de transmission, comprenant un premier moyen d'appel pour générer, en fonction desdites informations de spécification de destination générées, des premières informations d'appel adaptées audit premier mode de transmission et transmettant dans ledit premier mode de transmission lesdites premières informations d'appel sur ladite ligne de télécommunications;
un second moyen de télécommunications (21, 30) pour transmettre lesdits signaux de télécopie dans ledit second mode de transmission, comprenant un second moyen d'appel pour générer, en fonction desdites informations de spécification de destination générées, des secondes informations d'appel adaptées audit second mode de transmission et transmettant dans ledit second mode de transmission lesdites secondes informations d'appel sur ladite ligne de télécommunications;
un premier moyen de détection (22, 30) pour surveiller ladite ligne de télécommunications et détecter si un signal d'accusé de réception pour lesdites premières informations d'appel a été ou non renvoyé;
un moyen (22, 30) pour, en réponse à la détection dudit signal d'accusé de réception par ledit premier moyen de détection, activer ledit premier moyen de télécommunications pour lui faire transmettre des signaux de télécopie dans ledit premier mode de transmission;
un moyen (100, 21) pour, en réponse à la non-détection dudit signal d'accusé de réception par ledit premier moyen de détection, activer ledit second moyen d'appel;
un second moyen de détection (21, 30) pour surveiller ladite ligne de télécommunications et détecter si un signal d'accusé de réception pour lesdites secondes informations d'appel a été ou non renvoyé;
un moyen (21) pour, en réponse à la détection dudit signal d'accusé de réception par ledit second moyen de détection, activer ledit second moyen de télécommunications pour lui faire transmettre des signaux de télécopie dans ledit second mode de transmission ;
caractérisé par:
un moyen de mémoire (9) pour mémoriser des informations de spécification de destination et des informations de spécification de mode de transmission correspondant aux éléments respectifs des informations de spécification de destination;
un moyen (100) pour, en réponse audit signal d'indication de début de transmission, accéder audit moyen de mémoire et déterminer si ont été ou non mémorisées les informations de spécification de mode de transmission correspondant aux informations de spécification de destination générées;
un moyen (100) pour, en réponse à la détermination par ledit moyen de détermination de la non-existence d'informations de spécification de mode de transmission mémorisées, valider ledit premier moyen d'appel;
un moyen (100) pour, en réponse à la détermination par ledit moyen de détermination de l'existence d'informations de spécification de mode de transmission mémorisées, activer l'un desdits premier et second moyens d'appel en fonction desdites informations de spécification de mode de transmission déterminées; et
un moyen pour, une fois activé en réponse à la détermination par ledit moyen de détermination de l'existence d'informations de spécification de mode de transmission mémorisées, détecter une correspondance ou une non-correspondance entre lesdites informations de spécification de mode de transmission déterminées et le mode de transmission dont l'accusé de réception a été détecté par ledit premier ou second moyen de détection, et quand il n'y a pas correspondance, pour remplacer lesdites informations de spécification de mode de transmission mémorisées par les informations de spécification du mode de transmission qui a fait l'objet d'un accusé de réception.

2. Appareil selon la revendication 1, comportant en outre:
un moyen (100) pour, en réponse à la détermination de la non-existence par ledit moyen de détermination et à la détection de signal d'accusé de réception par le premier ou le second moyen de détection, mémoriser lesdites informations de spécification du mode de transmission qui a fait l'objet d'un accusé de réception dans un emplacement de ladite mémoire correspondant auxdites informations de spécification de destination générées.

3. Procédé de transmission de signaux de télécopie par l'intermédiaire d'une ligne de télécommunications d'un réseau de télécommunications numériques, la dite transmission de signaux de télécopie étant possible selon un premier et un second modes de transmission, et ledit premier mode de transmission ayant des possibilités de transmissions plus étendues que ledit second mode de transmission, comportant les étapes:
de génération d'informations de spécification de destination;
de génération d'un signal d'indication de début de transmission;
en réponse audit signal d'indication de début de transmission, d'accès à une mémoire et de détermination de la mémorisation ou non dans ladite mémoire d'informations de spécification de mode de transmission correspondant auxdites informations de spécification de destination;
quand les informations de spécification de mode de transmission n'ont pas été mémorisées dans ladite mémoire, de génération, en fonction desdites informations de spécification de destination générées, de premières informations d'appel adaptées audit premier mode de transmission et transmission dans ledit premier mode de transmission desdites premières informations d'appel sur ladite ligne de télécommunications;
de surveillance de ladite ligne de télécommunications et de détection du renvoi ou du non-renvoi d'un premier signal de réponse auxdites premières informations d'appel;
en réponse à la détection dudit premier signal de réponse, de transmission de signaux de télécopie dans ledit premier mode de transmission;
en réponse à la non-détection dudit premier signal de réponse, de génération, en fonction desdites informations de spécification de destination générées, de secondes informations d'appel adaptées audit second mode de transmission et de transmission dans ledit second mode de transmission desdites secondes informations d'appel sur ladite ligne de transmission ;
de surveillance de ladite ligne de télécommunications et de détection du renvoi ou du non-renvoi d'un second signal de réponse auxdites secondes informations d'appel;
en réponse à la détection dudit second signal de réponse, de transmission des signaux de télécopie dans ledit second mode de transmission;
en réponse à la détection de l'existence desdites informations de spécification de mode de transmission mémorisées, de génération desdites premières ou secondes informations d'appel en fonction desdites informations de spécification de mode de transmission détectées et exécution de l'appel; et
quand il n'y a pas correspondance entre des informations de spécification de mode de transmission mémorisées et détectées et un mode de transmission qui a fait l'objet d'un accusé de réception, de remplacement desdites informations de spécification de mode de transmission détectées par des informations de spécification dudit mode de transmission qui a fait l'objet d'un accusé de réception.

4. Procédé selon la revendication 3, comportant en outre l'étape:
quand lesdites informations de spécification de mode de transmission n'existent pas, d'écriture dans ladite mémoire d'informations de spécification d'un mode de transmission qui a fait l'objet d'un accusé de réception correspondant auxdites informations de spécification de destination générées.

5. Procédé selon la revendication 3 ou 4, comportant en outre l'étape:
en réponse à la non-détection dudit second signal d'accusé de réception, de rappel dans ledit premier mode de transmission.

6. Procédé selon la revendication 3 ou 4, comportant en outre l'étape:
en réponse à la non-détection dudit second signal d'accusé de réception, de déconnexion de ladite ligne de télécommunications et, en même temps, de mise en état d'attente de réception.
